# EUROPEAN PATENT SPECIFICATION

(11) **EP 3 500 131 B1**
(45) Date of publication and mention of the grant of the patent: **17.04.2024**
(21) Application number: 16836277.0
(22) Date of filing: 16.08.2016
(51) Int. Cl.: A47B 3/10, A47B 3/14, A47B 3/08, A45F 3/46, B62B 1/04, B62B 1/20, A47C 4/00, A45C 5/14, A45C 9/00

(54) **A WHEELABLE COLLAPSIBLE TABLE AND STORAGE ASSEMBLY**
ROLLBARER ZUSAMMENKLAPPBARER TISCH UND AUFBEWAHRUNGSANORDNUNG
ENSEMBLE TABLE PLIABLE DÉPLAÇABLE SUR ROUES ET SYSTÈME DE STOCKAGE

(43) Date of publication of application: 26.06.2019
(73) Proprietor: Purdy, Chrissie, Northcote, Victoria 3070 (AU)
(72) Inventor: Purdy, Chrissie, Northcote, Victoria 3070 (AU)
(74) Representative: Meissner Bolte Partnerschaft mbB
(86) International application number: PCT/AU2016/050755
(87) International publication number: WO 2017/027920

(56) References cited:
- AU-A4- 2005 100 244
- AU-A4- 2006 100 483
- AU-A4- 2006 100 483
- GB-A- 2 512 089
- JP-U- 3 060 610
- TW-A- 201 309 227
- US-A- 2 933 850
- US-A1- 2005 099 102
- US-A1- 2010 236 454
- US-A1- 2013 161 456
- US-A1- 2015 084 383
- US-A1- 2015 123 362
- US-B2- 8 480 117
- US-B2- 8 480 117
- Chrissie Purdy: "Parkset - A brilliant new Picnic Accessory", Youtube, 15 October 2014 (2014-10-15), XP054977257, Retrieved from the Internet: URL:https://www.youtube.com/watch?v=Pq4QI2 LYqFs [retrieved on 2017-04-10]
- 'Parkset - A brilliant new Picnic Accessory - Now on Indiegogo', [Online] 15 October 2014, XP054977257 Retrieved from the Internet: <URL:https://www.youtube.com/watch?v=Pq4QI2 LYqFs> [retrieved on 2016-08-26]

## Description

The present invention relates to a wheelable collapsible table and storage assembly for storing and transporting chairs and picnic equipment.

Transporting picnic equipment over a long distance to a picnic location, such as a park, festival or other outdoor event, can be strenuous and difficult requiring a table and chairs to be handled manually and separately to other picnic equipment such as beverages, food or utensils. A set of table and chairs may be transported by using a trolley or wheeled case, however these can be bulky and may not fit easily into a car boot. The Youtube Video "Chrissie Purdy:"Parkset- A brilliant new Picnic Accessory"" (https://www.youtube.com/watch?v=Pq4Q12LYqFs) describes a wheelable collapsible table and storage assembly for storing and transporting chairs and picnic equipment, the assembly having a receptacle and a lid, the receptacle having wheels and a handle at opposite ends, the lid being connected to the receptacle via foldable legs such that when the legs are in an extended condition, the lid is spaced apart from the receptacle so as to form a surface of a table, and when the legs are in a retracted condition, the lid fits over the opening of the receptacle so as to form a closed storage compartment, wherein the storage compartment has structure to hold a pair of collapsed chairs in a confined arrangement, each chair being collapsible in both width and depth directions. Patent document US 8 480 117 B2 describes the same wheelable collapsible table and storage assembly with some modifications.

The object of the present invention is solved by the subject matter of the independent claim. According to a first aspect of the present invention, there is provided a wheelable collapsible table and storage assembly for storing and transporting chairs and picnic equipment, the assembly having a receptacle and a lid, the receptacle having wheels and a handle at opposite ends, the lid being connected to the receptacle via foldable legs such that when the legs are in an extended condition, the lid is spaced apart from the receptacle so as to form a surface of a table, and when the legs are in a retracted condition, the lid fits over the opening of the receptacle so as to form a closed storage compartment, wherein the storage compartment has structure to hold a pair of collapsed chairs in a confined arrangement, each chair being collapsible in both width and depth directions.

The depth of the storage compartment can be substantially the depth of a collapsed chair.

The structure is configured to cradle one or both chairs.

The structure is arranged such that the chairs are spaced apart to define a space therebetween for storage of picnic equipment.

The space can be divided by a partition so as to form two further spaces, each further space being for confinement of a beverage container.

Preferably, the circumferential edge of the surface is raised.

The handle end of the receptacle has feet, the feet and wheels being arranged to support the assembly when it is in a generally horizontal position, wherein at least one of the feet is extendable.

The storage compartment can have at least one clip, the or each clip adapted to releasably secure a foldable leg such that when the leg is to be held in the extended condition the or each clip can lock the leg and when the leg is to be folded into the retracted condition, the or each clip can release the leg.

In order that the present invention can be more readily understood, preferred embodiments thereof will now be described, by way of non-limiting example only, with reference to the accompanying drawings, in which:
Figure 1A shows a side view of a wheelable collapsible table and storage assembly for storing and transporting chairs and picnic equipment according to a preferred embodiment of the present invention;
Figure 1B shows the assembly of Figure 1A being wheeled by a user;
Figure 2 shows a side view of the assembly of Figure 1A being expanded;
Figure 3 shows a side view of the assembly of Figure 1A in a fully expanded configuration to form a table with two chairs;
Figures 4 and 5 show top and cross-sectional views of a storage compartment of the assembly of Figure 1A;
Figures 6 and 7 show views of extendable feet according to embodiments of the assembly of Figure 1A;
Figures 8A and 8B show perspective views of a lid or table surface of the assembly; and
Figure 9 shows a perspective view of a foldable leg of the assembly.

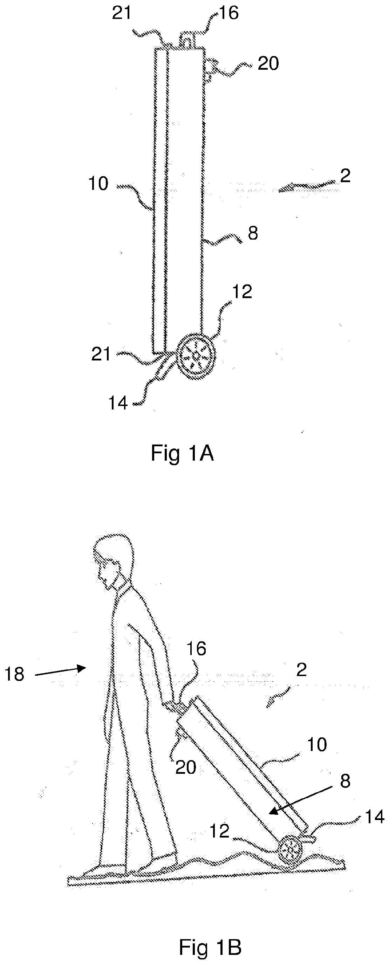

Referring now to Figures 1A to 9, which show views of a wheelable collapsible table and storage assembly 2 for storing and transporting chairs 4 and picnic equipment 6, according to a preferred embodiment of the present invention.

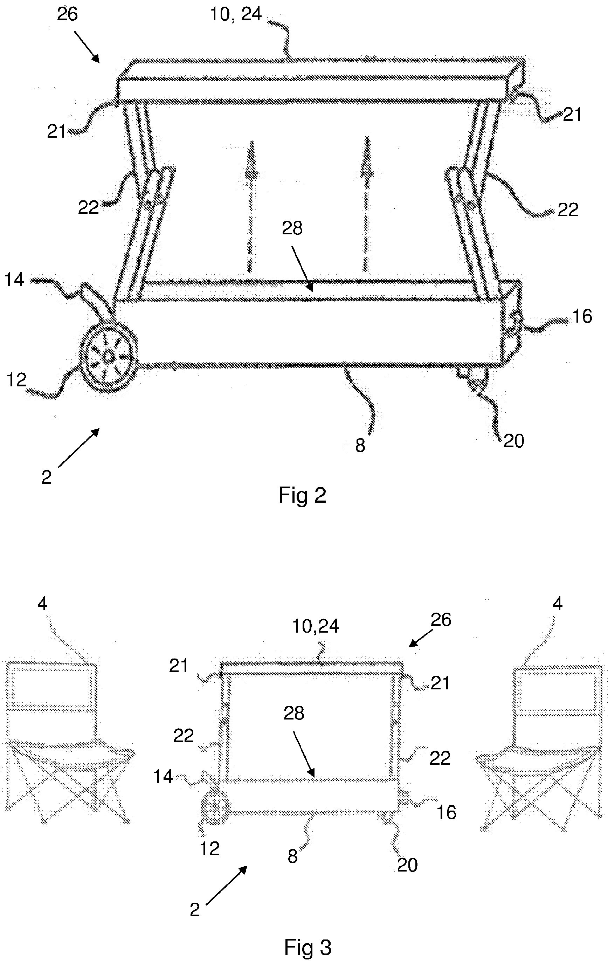

As shown in Figures 1A to 2, the assembly 2 has a receptacle 8 and a lid 10. At one end of the receptacle 8, there is provided wheels 12 and stand 14, which are arranged to allow the assembly 2 to be supported in an upright configuration, as shown in Figure 1A. At the other end, the receptacle 2 has a handle 16 which allows the assembly 2 to be wheeled by a user 18, as shown in Figure 1B. In Figure 2, there are shown feet 20 located on the receptacle 8 adjacent to the handle 16. When the assembly 2 is in a generally horizontal configuration, the arrangement of the wheels 12 and feet 20 support the assembly 2 to keep it apart from the ground. The assembly also has closure members 21 to keep the lid 10 firmly on the receptacle 8 during transport or storage.

Figures 2 and 3 show that the lid 10 is connected to the receptacle 8 by foldable legs 22 such that when the assembly 2 is in the horizontal configuration, the lid 10 can be extended to be spaced apart from the receptacle 8 to form a surface 24 of a table 26. In particular, Figure 2 shows the legs 22 in the process of transition between an extended and retracted condition while in Figure 3 the legs 22 are fully extended such that the lid 10 forms a stable table surface 24. When the lid 10 is in the retracted condition, the lid 10 fits over the opening of the receptacle 8 so as to form a closed storage compartment 28 which can store collapsed chairs 4 and other picnic equipment 6.

In an example use of the assembly 2, the assembly 2 can compactly store chairs 4 and picnic equipment 6, and then transport them easily to a picnic location such as an outdoor event, park or festival as shown in Figure 2. Having arrived at the picnic location, the assembly 2 can be expanded to quickly and efficiently form a chair and table setting for two people, as shown in Figure 3. At the end of the event, the chairs 4 can be collapsed and stored in the storage compartment 28 before collapsing table 26 and the entire compact assembly 2 can then easily transported away from the picnic location.

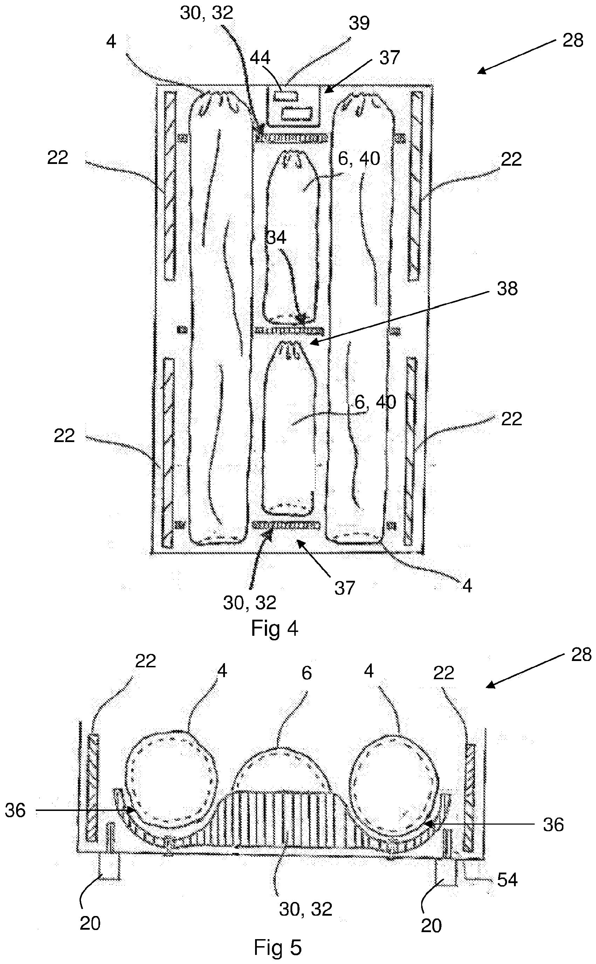

Figures 4 and 5 show top and cross-sectional views of the storage compartment 28. At the sides of the storage compartment 28, there is space for the foldable legs 22, such that when the legs 22 are in the retracted condition the legs 22 lie adjacent along the longitudinal sides of the storage compartment 28. The storage compartment 28 has structure 30 that can hold a pair of chairs 4 in confined configuration, each chair 4 being collapsible in both width and depth dimensions. The structure 30 is shaped to cradle at least part of the lateral circumference of each chair 4 such that the chairs 4 are confined and therefore do not move when the assembly 2 is being transported. The storage compartment 28 is configured such that it has a depth that is substantially the depth of a collapsed chair 4, so that the assembly 2 is compact and sufficiently small to easily allow storage in areas, such as a car boot or a cupboard.

As shown in Figure 4, the structure 30 is in the form of three rib-like elements 32, 34. Two of the rib-like elements 32 are situated at opposite end portions of the storage compartment 28 to cradle the head and foot of each chair 4 while a third rib-like element 34 substantially supports the chairs 4 intermediate the end portions. Each rib-like element 32, 34, as shown in the cross-sectional view of Figure 5, has recesses 36 shaped to confine each chair 4. The chairs 4, when confined by the structure 30, are arranged in parallel configuration and spaced apart thereby forming space 38 for storage of picnic equipment 6, for example, beverage coolers or bottles 40. The intermediate rib-like element 34 acts as a partition separating the space 38 into two further spaces which can be arranged to confine two bottle coolers 40 and therefore the bottle coolers 40 can be confined without risk of damage while the assembly 2 is being wheeled.

Smaller spaces 37 can be also formed by the confined spaced apart chairs 4 at their head or foot ends. As an example of a practical use of the space 37, space 37 can have a storage compartment 39 which may be used for the storage of more picnic equipment 6 or any accessories associated with the assembly 2, such as tools or spare parts, for example, caps 44 for extendable feet 42.

The arrangement of the structure 30 is such that the chairs 4 and picnic equipment 6 can be compactly and efficiently confined within the storage compartment 28 thereby allowing the assembly 2 itself to be compact and to prevent damage to the contents therein. A compact assembly 2 can be more easily fitted into a boot of a car and is therefore easier to transport to or from a picnic location.

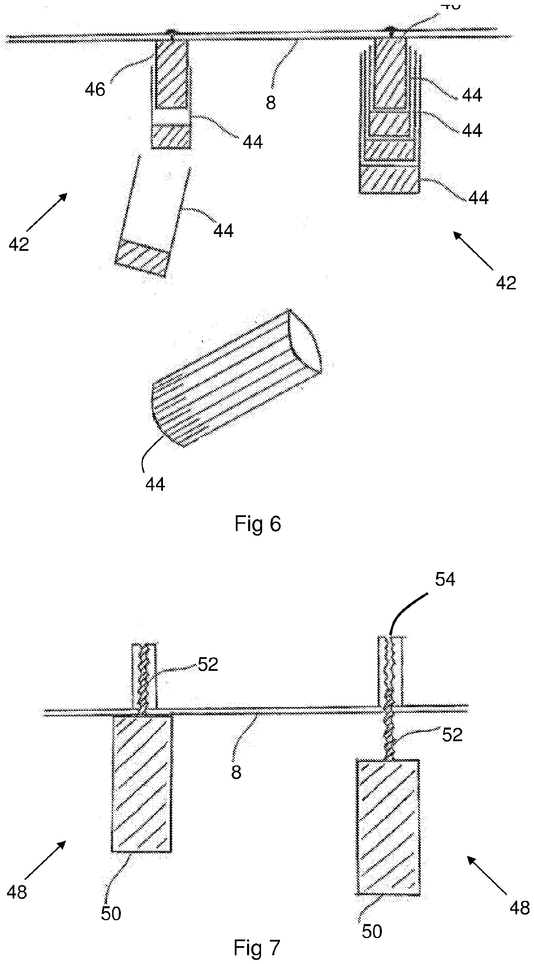

Figures 6 and 7 show detailed views of two examples of extendable feet 42, 48, that can be used in the event the assembly is used in a generally horizontal position over uneven ground. The length of the feet 42, 48 can be adjusted so that the assembly 2 and subsequently the surface 24 of the table 26 can be made level.

Figure 6 shows an example of extendable feet 42 according to the invention having a set of nested caps 44 which are adapted to fit over a cylindrical base 46 that is connected to the receptacle 8. To extend or reduce the length of the feet 42, one or more caps 44 can be replaced or removed. Any caps 44 which are not in use can be stored in storage compartment 39, as shown in Figure 4.

Figure 7 shows that another example of extendable feet 48, not according to the invention, each of which has a cylindrical base 50 connected to the receptacle 8 via a threaded bar 52 which can be screwed into a corresponding tapped aperture 54 provided in the receptacle 8. To extend or retract the feet 48, the base 50 can be rotated clockwise or anti-clockwise such that the bar 52 can be received or removed from aperture 54.

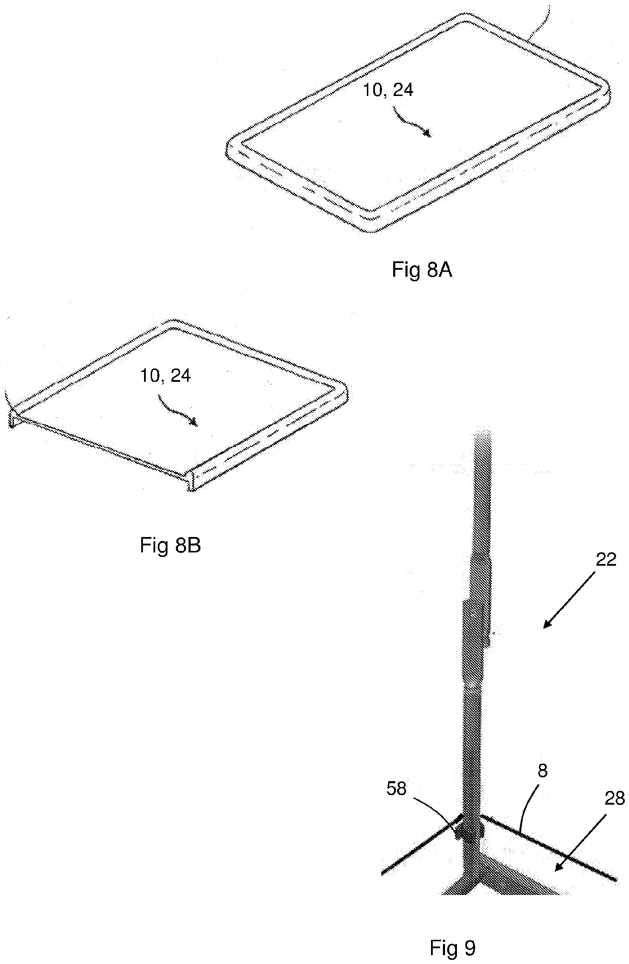

In Figures 8A and 8B there is shown an example of the lid 10 or the table surface 24, which is shown separate to the receptacle 8 for the purpose of illustration. In Figure 8B, part of the lid/surface 10, 24 has been removed to show the cross-section profile, in particular where the circumferential edge of the lid/surface 10, 24 has been raised thereby forming a lip 56. The main purpose of the lip 56 is to contain spillage of beverages although it can also reduce the risk of items, such as picnic equipment 6, falling off the surface 24 of the table 26.

Figure 9 shows a perspective view of an example foldable leg 22 in the extended condition. The inner wall of the storage compartment 28 has a clip 58 such that when the leg 22 is extended, the leg 22 can be received by the clip 58 to lock the leg 22 thereby reducing or eliminating the risk of unwanted retraction of the leg 22. Two, three or four such clips 58 can be provided in the storage compartment 28 thereby allowing one or more legs 22 to be locked in the extended condition to provide an even more stable table surface 24. The or each leg 22 can be removed from the clip 58, for example by the application of force, so that the leg(s) 22 can be returned to the retracted condition, thereby allowing the lid 10 to cover the opening of the receptacle 8 and collapsing the table 26.

Further modifications and improvements can be made without departing from the scope of the present invention, as defined in the appended claims.

## Claims

1. A wheelable collapsible table and storage assembly (2) for storing and transporting chairs (4) and picnic equipment (6), the assembly (2) having a receptacle (8), a lid (10) and a pair of collapsible chairs (4), the receptacle (8) having wheels (12) and a handle (16) at opposite ends, the lid (10) being connected to the receptacle (8) via foldable legs (22) such that when the legs (22) are in an extended condition, the lid (10) is spaced apart from the receptacle (8) so as to form a surface (24) of a table (26), and when the legs (22) are in a retracted condition, the lid (10) fits over the opening of the receptacle (8) so as to form a closed storage compartment (28), wherein the storage compartment (28) has structure (30) in the form of three rib-like elements (32, 34) that cradle a head, foot and intermediate portion of the w pair of collapsed chairs (4) to confine each chair (4) within the storage compartment (28) in a parallel and spaced apart arrangement to form a space (38) therebetween for storage of the picnic equipment (6), wherein two of the rib-like elements (32, 34) are situated at opposite end portions of the storage compartment (28) to cradle the head and foot of each chair (4), wherein the third rib-like element substantially supports the chairs (4) intermediate portions, wherein each rib-like element (32, 34) has recesses (36) shaped to confine each chair (4), each chair (4) being collapsible in both width and depth directions, and wherein the handle end of the receptacle (8) has feet (42), the feet (42) and wheels (12) being arranged to support the assembly (2) when it is in a generally horizontal position, wherein at least one of the feet (42) is extendable and wherein the extension of the feet (42) is provided by a set of nested caps (44) which are adapted to fit over a cylindrical base (46) connected to the receptacle (8) such that adding or removing caps (44) extends or reduces the length of the feet (42).

2. An assembly (2) according to claim 1, wherein the depth of the storage compartment (28) is substantially the depth of one of said collapsible chairs (4).

3. An assembly (2) *- according to claim 1, wherein the space (38) is divided by rib-like element (34) so as to separate the space (38) into two further spaces, each further space being for confinement of a beverage container (40).

4. An assembly (2) according to any one of the preceding claims, wherein the circumferential edge of the surface (24) is raised.

5. An assembly (2) 2- according to any one of the preceding claims, wherein the storage compartment (28) has at least one clip (58), the or each clip (58) adapted to releasably secure a foldable leg (22) such that when the leg (22) is to be held in the extended condition the or each clip (58) can lock the leg (22) and when the leg (22) is to be folded into the retracted condition, the or each clip (58) can release the leg (22).

## Patentansprüche

1. Rollbare zusammenklappbare Tisch- und Aufbewahrungsanordnung (2) zum Aufbewahren und Transportieren von Stühlen (4) und Picknick-Ausrüstung (6), wobei die Anordnung (2) einen Aufnahmebehälter (8), einen Deckel (10) und ein Paar Klappstühle (4) umfasst,
wobei der Aufnahmebehälter (8) an entgegengesetzten Enden Räder (12) und einen Griff (16) aufweist, wobei der Deckel (10) mit dem Aufnahmebehälter (8) über faltbare Beine (22) derart verbunden ist, dass der Deckel (10), wenn sich die Beine (22) in einem auseinandergefalteten Zustand befinden, von dem Aufnahmebehälter (8) derart beabstandet ist, dass eine Oberfläche (24) eines Tischs (26) gebildet wird, und dass der Deckel (10), wenn sich die Beine (22) in einem zusammengefalteten Zustand befinden, derart über die Öffnung des Aufnahmebehälters (8) passt, dass ein geschlossenes Aufbewahrungsfach (28) gebildet wird, wobei das Aufbewahrungsfach (28) eine Struktur (30) in der Form von drei rippenartigen Elementen (32, 34) aufweist, die ein Kopfteil, ein Fußteil und einen Zwischenabschnitt des Paars von zusammengeklappten Stühlen (4) halten, um jeden Stuhl (4) in dem Aufbewahrungsfach (28) in einer parallelen und beabstandeten Anordnung zu halten, um dazwischen einen Raum (38) für die Aufbewahrung der Picknick-Ausrüstung (6) zu bilden, wobei sich zwei der rippenartigen Elemente (32, 34) an entgegengesetzten Endabschnitten des Aufbewahrungsfachs (28) befinden, um das Kopfteil und das Fußteil von jedem Stuhl (4) zu halten, wobei das dritte rippenartige Element im Wesentlichen die Zwischenabschnitte der Stühle (4) abstützt, wobei jedes rippenartige Element (32, 34) Einbuchtungen (36) aufweist, die dazu geformt sind, jeden Stuhl (4) einzuschließen, wobei jeder Stuhl (4) sowohl in der Breiten- als auch in der Tiefenrichtung zusammenklappbar ist und wobei das Griffende des Aufnahmebehälters (8) Füße (42) hat, wobei die Füße (42) und die Räder (12) dazu eingerichtet sind, die Anordnung (2) zu tragen, wenn sie sich in einer im Allgemeinen horizontalen Lage befindet, wobei mindestens einer der Füße (42) verlängerbar ist und wobei das Verlängern des Fußes (42) durch einen Satz verschachtelter Kappen (44) besorgt wird, die dazu angepasst sind, über eine zylindrische Basis (46) zu passen, die mit dem Aufnahmebehälter (8) verbunden ist, sodass das Hinzufügen oder Entfernen von Kappen (44) die Länge der Füße (42) vergrößert oder verkleinert.

2. Anordnung (2) nach Anspruch 1, wobei die Tiefe des Aufbewahrungsfachs (28) im Wesentlichen die Tiefe von einem der Klappstühle (4) ist.

3. Anordnung (2) nach Anspruch 1, wobei der Raum (38) durch ein rippenartiges Element (34) derart geteilt wird, dass der Raum (38) in zwei weitere Räume unterteilt wird, wobei jeder weitere Raum zum Einschließen eines Getränkebehälters (40) dient.

4. Anordnung (2) nach einem der vorhergehenden Ansprüche, wobei der Umfangsrand der Oberfläche (24) erhöht ist.

5. Anordnung (2) nach einem der vorhergehenden Ansprüche, wobei das Aufbewahrungsfach (28) mindestens eine Klammer (58) aufweist, wobei die oder jede Klammer (58) dazu angepasst ist, ein faltbares Bein (22) derart lösbar zu sichern, dass die oder jede Klammer (58) das Bein (22) arretieren kann, wenn das Bein (22) in dem auseinandergefalteten Zustand gehalten werden soll, und dass die oder jede Klammer (58) das Bein (22) freigeben kann, wenn das Bein (22) in den zusammengefalteten Zustand gefaltet werden soll.

## Revendications

1. Ensemble table et de stockage, pliable, déplaçable sur roues (2) destiné à stocker et à transporter des chaises (4) et un équipement de pique-nique (6), l'ensemble (2) présentant un contenant (8), un couvercle (10) et une paire de chaises pliables (4),
le contenant (8) présentant des roues (12) et une poignée (16) en des extrémités opposées, le couvercle (10) étant relié au contenant (8) par l'intermédiaire de pieds pliables (22) de telle sorte que, lorsque les pieds (22) sont dans un état étendu, le couvercle (10) est écarté du contenant (8) de façon à former une surface (24) d'une table (26) et, lorsque les pieds (22) sont dans un état rétracté, le couvercle (10) s'adapte sur l'ouverture du contenant (8) de façon à former un compartiment de stockage fermé (28), le compartiment de stockage (28) présentant une structure (30) sous la forme de trois éléments de type nervure (32, 34) qui entourent une tête, un pied et une partie intermédiaire de la paire de chaises pliées (4) afin d'enfermer chaque chaise (4) à l'intérieur du compartiment de stockage (28) dans un agencement parallèle et écarté pour former un espace (38) entre eux permettant de stocker l'équipement pique-nique (6), deux des éléments de type nervure (32, 34) étant situés au niveau de parties d'extrémité opposées du compartiment de stockage (28) afin d'entourer la tête et le pied de chaque chaise (4), le troisième élément de type nervure supportant sensiblement les parties intermédiaires de chaises (4), chaque élément de type nervure (32, 34) présentant des évidements (36) façonnés pour entourer chaque chaise (4), chaque chaise (4) étant pliable dans les deux directions de largeur et de profondeur et l'extrémité de poignée du contenant (8) présentant des pieds (42), les pieds (42) et les roues (12) étant agencés pour supporter l'ensemble (2) lorsqu'il est dans une position généralement horizontale, au moins l'un des pieds (42) étant extensible et l'extension des pieds (42) étant effectué par un ensemble de capuchons (44) emboîtés qui sont conçus pour s'adapter sur une base cylindrique (46) reliée au contenant (8) de telle sortie que l'ajout ou le retrait des capuchons (44) étend ou réduit la longueur des pieds (42).

2. Ensemble (2) selon la revendication 1, la profondeur du compartiment de stockage (28) étant sensiblement la profondeur de l'une desdites chaises pliables (4).

3. Ensemble (2) selon la revendication 1, l'espace (38) étant divisé par un élément de type nervure (34) de façon à séparer l'espace (38) en deux autres espaces, chaque autre espace étant destiné à entourer un récipient à boisson (40).

4. Ensemble (2) selon l'une quelconque des revendications précédentes, le bord circonférentiel de la surface (24) étant relevé.

5. Ensemble (2) selon l'une quelconque des revendications précédentes, le compartiment de stockage (28) présentant au moins une pince (58), la ou chaque pince (58) étant conçue pour fixer de manière amovible un pied pliable (22) de telle sorte que lorsque le pied (22) doit être maintenu dans la condition étendue, la ou chaque pince (58) peut verrouiller le pied (22) et lorsque le pied (22) doit être plié dans la condition rétractée, la ou chaque pince (58) peut libérer le pied (22).
